# EUROPÄISCHE PATENTSCHRIFT

(11) **EP 0 749 465 B1**
(45) Veröffentlichungstag und Bekanntmachung des Hinweises auf die Patenterteilung: **22.05.2002**
(21) Anmeldenummer: 95910522.2
(22) Anmeldetag: 25.02.1995
(51) Int. Cl.: C09K 9/02, C08K 5/00, C08L 71/02, C08L 25/14

(54) **VERNETZTE POLYMERSYSTEME**
CROSS-LINKED POLYMER SYSTEMS
SYSTEMES DE POLYMERES RETICULES

(30) Priorität: 11.03.1994 DE 4408156
(43) Veröffentlichungstag der Anmeldung: 27.12.1996
(73) Patentinhaber: BASF AKTIENGESELLSCHAFT, 67056 Ludwigshafen (DE)
(72) Erfinder: JAHNS, Ekkehard, D-69493 Hirschberg (DE); KRÖNER, Hubertus, D-67435 Neustadt (DE); SCHROF, Wolfgang, D-67271 Neuleiningen (DE); KLODWIG, Utz, D-68163 Mannheim (DE)
(86) Internationale Anmeldenummer: EP9500692
(87) Internationale Veröffentlichungsnummer: WO9524453

(56) Entgegenhaltungen:
- EP-A- 0 311 566
- EP-A- 0 559 113
- DATABASE WPI Section Ch, Week 9246 Derwent Publications Ltd., London, GB; Class D16, AN 92-377561 & JP,A,04 278 075 (GRACE &CO-CONN W R) , 2.Oktober 1992

## Beschreibung

Die vorliegende Erfindung betrifft ein Verfahren zur Herstellung von Polymersystemen mit reversibel temperaturabhängiger Strahlungstransmission.

Die Bestrahlung von geschlossenen Räumen oder technischen Vorrichtungen, beispielsweise Sonnenkollektoren, mit Licht führt zu deren Aufheizung, welche je nach dem Energiegehalt und der Intensität des Lichts unterschiedlich groß und teilweise schädlich sein kann. Zum Beispiel kommt es auf Grund des tages- und jahreszeitlich schwankenden Energieangebots der Sonneneinstrahlung in Gebäuden, Gewächshäusern, Autos und Gehäusen zu unerwünschten Temperaturwerten. Dem kann bislang nur durch aufwendige Beschattungssysteme, wie beispielsweise Abdeckungen und Jalousien abgeholfen werden.

Ein Verglasungssystem mit temperaturgesteuerter Lichtdurchlässigkeit basierend auf Polymermischungen wurde in DE 34 36 477 C2 beschrieben. Die dort beschriebene Polymermischung ist unterhalb einer bestimmten Temperatur transparent, entmischt sich aber oberhalb dieser Temperatur und ist dann trübe. Dies wird im folgenden als thermotropes Verhalten bezeichnet.

Nachteilig ist allerdings, daß die entmischten, trüben Polymere bei einer Abkühlung nicht beliebig oft reversibel in ihren ursprünglichen vermischten, transparenten Zustand übergehen können.. Dadurch ist die Anforderung an ein temperaturgesteuertes Beschattungssystem - bei hoher Temperatur Beschattung, bei niedriger Temperatur erneute Lichtdurchlässigkeit und dies häufig wechselnd - nicht mehr erfüllt.

Aus EP-A-311 566 sind thermotrope Polymergele bekannt.

In der DE 42 06 317 A1 wird eine, auf chemischem Wege vernetzte Polymermischung beschrieben, die sich auch nach längerer Erhitzung nicht mehr über ein bestimmtes Maß hinaus entmischen kann und somit wieder reversibel in den abgekühlten, transparenten Zustand übergehen kann.

Diese Polymermischungen werden zum Beispiel als Lösung auf die zu schützenden Glasflächen aufgestrichen, wobei das Lösungsmittel verdampft.

Nachteilig ist bei DE 42 06 317 A1 allerdings, daß die chemische Vernetzung, die üblicherweise kurz vor der Applikation durchgeführt wird, sofort nach dem Mischen der Polymere mit dem Vernetzer in Lösung einsetzt und während des Bestreichens der Glasplatte voranschreitet. Dies führt zu einer rauhen, gewellten Oberfläche der thermotropen Polymerschicht. Die wellige Oberfläche ist für eine transparente Verglasung, durch die man bei Temperaturen unterhalb der Trübungstemperatur hindurch sehen möchte, nicht geeignet.

Darüberhinaus sind für die chemische Vernetzung reaktive funktionelle Gruppen in den zu vernetzenden Polymerketten nötig, welches die Auswahl geeigneter Polymerisate zur Herstellung von thermotropen Polymermischungen einschränkt.

Der Erfindung lag daher die Aufgabe zugrunde, den geschilderten Mängeln abzuhelfen.

Demgemäß wurde ein Verfahren zur Herstellung von vernetzten, wasser- und lösemittelfreien Polymersystemen mit reversibel temperaturabhängiger Strahlungstransmission, dadurch gekennzeichnet, daß die Polymersysteme strahlungsinduziert vernetzt werden, gefunden.

Der Mechanismus der temperaturgesteuerten, reversiblen Eintrübung von Polymeren besteht, allgemein gesprochen darin, daß sich jenseits einer bestimmten Temperatur die Struktur des Polymersystems so ändert, daß die Strahlungstransmission sich verändert.

Üblicherweise tritt dieses Phänomen dann auf, wenn sich in einer Polymermischung Komponenten mit unterschiedlichen Brechungsindizes temperaturinduziert entmischen. Die Temperatur bei welcher dieser Vorgang stattfindet, ist die untere kritische Entmischungstemperatur. Sowohl diese als auch Aspekte thermotroper Polymermischungen wurden in allgemeiner Form in DE 34 36 477 C2 bereits abgehandelt.

Polymersysteme mit temperaturinduzierter Strahlungstransmission bestehen vorteilhafterweise aus mindestens zwei Polymeren P1 und P2, deren chemische Zusammensetzung an sich unkritisch ist, wenn man folgende Randbedingungen beachtet. Um bei tiefen Temperaturen, unterhalb der kritischen Entmischungstemperatur, eine verträgliche und damit auch transparente Polymermischung zu erhalten, muß im allgemeinen eine Wechselwirkung zwischen den Polymeren P1 und P2 auftreten. Die Wechselwirkung zwischen den beiden Polymeren der Polymersysteme darf weder zu groß noch zu klein sein. Ist die Wechselwirkung groß, beobachtet man eine sehr hohe Entmischungstemperatur der Polymermischung, die über 100 °C betragen kann. Ist die Wechselwirkung zwischen den beiden Polymeren zu klein, so ist die Polymermischung unter Umständen bereits bei Raumtemperatur entmischt und somit trübe. Die Schalttemperatur - die Temperatur, bei der sich die Strahlungstransmission des Polymersystems ändert - liegt also unterhalb von ca. 20 °C. Möglicherweise wird beim Abkühlen überhaupt keine Verträglichkeit mehr beobachtet und die Polymermischung bleibt trüb.

Zur Erzielung einer kurzen Schaltzeit - die Zeitspanne in der sich die Strahlungstransmission der Polymersysteme temperaturinduziert ändert - verwendet man vorteilhaft Polymere P1 und P2, deren Mischungs-Glasübergangstemperatur in der verträglichen Polymermischung unterhalb der Schalttemperatur der Polymersysteme liegt. Wichtig ist dabei eine hohe molekulare Beweglichkeit von wenigstens einer Polymerkomponente der Polymermischung. Ein Maß für die molekulare Beweglichkeit ist die Glasübergangstemperatur eines Polymeren. Unterstützt werden kann eine hohe Beweglichkeit durch ein niedriges Molekulargewicht einer Polymerkomponente. In der Polymermischung genügt es, wenn lediglich ein Polymer eine niedrige Glasübergangstemperatur und damit eine hohe molekulare Beweglichkeit besitzt. Wenn das Polymer P2 beispielsweise eine niedrige Glasübergangstemperatur hat, kann das zweite Polymer P1 eine hohe Glasübergangstemperatur oberhalb der Schalttemperatur besitzen, solange die Glasübergangstemperatur der verträglichen Polymermischung unterhalb der Trübungstemperatur bleibt. Dieses zweite Polymer mit geringerer Beweglichkeit kann deshalb auch vernetzt werden, ohne daß sich die Schaltzeit der Polymermischung stark verlangsamt. Näheres wurde in DE 42 06 317 A1 beschrieben.

Die Wechselwirkung zwischen den beiden Polymeren kann über verschiedene, in der Chemie gut bekannte Mechanismen erfolgen, wie zum Beispiel Salzbildung, Wasserstoffbrückenbindung, Komplexbildung, Pi-Elektronenwechselwirkung (z.B. bei aromatischen Strukturen) oder durch dipolare Wechselwirkung.

Geeignete Polymere P1 und P2 können aus einer Reihe von bekannten Polymeren, beispielsweise Homo- und Copolymeren ausgewählt werden, deren Wechselwirkungen miteinander Trübungspunkte im geeigneten Bereich aufweisen. Beispiele für geeignete Polymere P1 oder P2 sind: Polystyrol, Polyvinylmethylether, Polymethyl(meth)-acrylat, Styrol-Acrylnitril-Copolymere, Poly(ε-caprolacton), Chlorkautschuk, Ethylen-Vinylacetat-Copolymere, PVC, Polycarbonat, Polyvinylidenfluorid, Polyethylacrylat, Poly-n-butylacrylat, Poly(ethylhexylacrylat-co-acrylsäure), Poly(tetradecylmethacrylat-co-styrol-co-3-dimethylamino-2,2-dimethylpropyl-1-methacrylat), Poly(styrol-co-hydroxyethylmethacrylat), Polypropylenoxid.

Durch die Veränderung des relativen Gehalts der einzelnen Comonomeren (wechselwirkende Gruppen) in einem Copolymeren kann sehr einfach die kritische Trübungstemperatur auf einen gewünschten Wert eingestellt werden.

Der relative Gehalt der Comonomeren ist nicht kritisch. Er liegt üblicherweise im Bereich von 0,1 bis 50 Mol-%, vorzugsweise von 0,5 bis 25 Mol-%.

Das Molekulargewicht Mn (Zahlenmittelwert) der Polymeren P1 oder P2 ist an sich unkritisch, liegt aber im allgemeinen im Bereich von 500 bis 1.000.000, vorzugsweise von 1.000 bis 500.000.

Das Mischungsverhältnis der Polymeren P1 und P2 richtet sich nach der gewünschten Trübungstemperatur und kann insofern frei gewählt werden. Im allgemeinen liegen die Mischungsverhältnisse P1 : P2 im Bereich von 5 : 95 bis 95 : 5, vorzugsweise von 20 : 80 bis 80 : 20 Gewichts-%.

Die Herstellung der Polymeren P1 und P2 kann mit den hierfür bekannten Herstellverfahren erfolgen wie beispielsweise Massepolymerisation, Lösungspolymerisation, Suspensionspolymerisation, Dispersionspolymerisation und Emulsionspolymerisation.. Wenn sich die relativen Reaktivitäten der Comonomeren bei der Herstellung von Copolymeren stark unterscheiden, kann es bei einigen Herstellverfahren dieser Polymeren zu einer uneinheitlichen Verteilung der Comonomeren in den Polymerketten kommen, welches zu Problemen bei der Verträglichkeit der Polymermischungen führen kann. Diesem Nachteil kann abgeholfen werden, wenn man beispielsweise die Polymerisationsreaktion bei geringem Monomerumsatz abbricht, zum Beispiel nach 10 bis 20 Gew.-% Monomerumsatz.

Die Polymersysteme können zusätzlich noch Photoinitiatoren enthalten. Dies sind chemische Verbindungen die unter der Einwirkung von Strahlung, zum Beispiel Licht, Radikale bilden, die ihrerseits mit den Polymeren P1 und P2 reagieren können und so zu einer Vernetzung oder/und Pfropfung der Polymerketten untereinander führen können. Derartige Verbindungen sind dem Fachmann bekannt und im Handel erhältlich, zum Beispiel Benzophenon, Benzoin, Acetophenon, Benzildimethylketal, Dibenzoyldisulfid, O-Acyl-α-oximinoketone, S-Phenylthiobenzoate, Acylphosphinoxide, Dibenzoylmethane, Phenylazo-4-diphenylsulfon, 4-Morpholino-α-dialkylaminoacetophenone, Campferchinon, Fluorenone, α-Ketocumarine, Anthrachinone und Terephthalophenone. Sie werden in einer Menge von 0,1 bis 15 Gew.%, vorzugsweise von 0,5 bis 10 Gew.-%, bezogen auf den Feststoffgehalt des Polymersystems, eingesetzt.

Die Photoinitiatoren des Polymersystems können aber auch als Comonomere Bestandteil von Polymerketten sein, wie beispielsweise in DE 38 44 445 A1 beschrieben. Photoinitiator-Comonomere im Sinne der vorliegenden Erfindung sind beispielsweise Allylbenzoylbenzoat, (Meth)acrylsäure-2-alkoxy-2-phenyl-2-benzoylethylester, (Meth)acroyloxyethylcarbonatoacetophenon und (Meth)acroyloxybutylcarbonatoacetophenon. Bevorzugt im Sinne der vorliegenden Erfindung sind (Meth)acroyloxybutylcarbonatobenzophenon, (Meth)acroyloxyethylcarbonatobenzophenon, (Meth)acroyloxypropylcarbonatobenzophenon und insbesondere (Meth)acroyloxybutylcarbonatobenzophenon.

Die Photoinitiator-Comonomere sind in diesen Fällen zu 0,01 bis 15 Mol-%, vorzugsweise von 0,1 bis 12 Mol-% und insbesondere von 0,5 bis 10 Mol-% im jeweiligen Copolymeren einpolymerisiert enthalten.

Bevorzugt im Sinne der vorliegenden Erfindung sind demnach Polymersysteme aus einem Homo- oder Copolymer P2 mit niedriger Glasübergangstemperatur und einem Molekulargewicht Mn von 500 bis 50.000 wie beispielsweise Polyethylenoxid, Polytetrahydrofuran Polyvinylmethylether und besonders Polypropylenoxid und gegebenenfalls einem einpolymerisierbaren Photoinitiator, wie zum Beispiel (Meth)acroyloxybutylcarbonatobenzophenon. Bevorzugte Polymere P1 sind molekular einheitliche Copolymere aus Styrol und (Meth)acrylatmonomeren, und insbesondere Copolymere aus Styrol und einem oder mehreren Monomeren die Wasserstoffbrückenbindungen zum Polymeren P2 ausbilden können, wie beispielsweise Hydroxyethyl(meth)acrylat, Dimethylaminoethyl(meth)acrylat, (Meth)acrylsäure, p-Hydroxystyrol und gegebenenfalls einem einpolymerisierbaren Photoinitiator, wie zum Beispiel (Meth)acroyloxybutylcarbonatobenzophenon. Abhängig vom Polymeren P2 kann der Gehalt an Comonomeren, die Wasserstoffbrückenbindungen ausbilden können, 0,1 bis 30 Mol-% betragen, um eine Trübungstemperatur der Polymermischungen von 20 bis 120 °C einstellen zu können. Der genaue Comonomergehalt kann durch die Vielzahl der Kombinationsmöglichkeiten der Polymere P1 und P2 nicht allgemein angegeben werden.

Neben den bisher erwähnten Komponenten kann das erfindungsgemäße Polymersystem noch übliche Zusatzstoffe wie beispielsweise Farbstoffe, Pigmente, Antikorrosiva und Weichmacher in den für den jeweiligen Zweck üblichen Mengen enthalten.

Zur Verbesserung der Polymerstabilität in den sonnenenergetischen Vorrichtungen können übliche Stabilisatoren gegen fotochemischen, oxidativen, thermischen oder sonstigen Abbau zugesetzt werden, und zwar sowohl vor der strahlungsinduzierten Vernetzung, als auch danach.

Die Polymersysteme können wie folgt hergestellt werden. Man löst die erfindungsgemäßen Komponenten in einem geeigneten Lösungsmittel, wie zum Beispiel Toluol oder Xylol und bringt die Lösung auf einen Träger, wie beispielsweise eine Glasplatte, eine Kunststoffplatte oder eine Kunststoffolie auf. Während oder nach dem Verdampfen des Lösungsmittels wird die behandelte Fläche bestrahlt. Die Wellenlänge der Strahlung liegt dabei im Bereich von 100 bis 2000 nm, bevorzugt von 100 bis 1000 nm und insbesondere von 100 bis 800 nm. Außer UV-Strahlung oder sichtbarem Licht können auch Elektronenstrahlen im Energiebereich von 100 bis 500 keV oder Gammastrahlen zur Vernetzung verwendet werden.

Die Herstellung eines Films des Polymersystems kann auch ohne Lösungsmittel erfolgen, indem man zum Beispiel die gemischten Komponenten aufschmilzt. Dies kann beispielsweise in einem Extruder geschehen, wobei die geschmolzene Mischung durch eine breite Düse in Form einer Folie-extrudiert und dann bestrahlt wird. Desweiteren kann der Film direkt auf dem zu beschichtenden Körper durch Erhitzen und Bestrahlen des erfindungsgemäßen Polymersystems erzeugt werden.

Die Dicke des trockenen Films liegt im Bereich von ca. 50 µm bis 2 mm. Das erfindungsgemäße Polymersystem muß nicht notwendigerweise auf einen Träger aufgebracht werden, sondern kann als solches, beispielsweise in Form einer Folie oder Platte, verwendet werden.

Bei den Polymersystemen liegt die kritische Entmischungstemperatur im allgemeinen in einem Bereich von 20 bis 120 °C, vorzugsweise in einem Bereich von 30 bis 100 °C.

Außer der Anwendung des Polymersystems in Verglasungssystemen wie zum Beispiel Fenster von Gebäuden, Wintergärten oder Gewächshäusern sind auch sonnenenergetische Anwendungen möglich. Darunter versteht man, daß zum Beispiel Sonnenkollektoren vor Überhitzung geschützt werden. Auch transparente Wärmedämmungen, die während einer relativ kalten Periode in einer Hausfassade Sonnenenergie nutzen helfen, können durch die Anwendung der erfindungsgemäßen Polymersysteme während starker Sonneneinstrahlung im Sommer eine Überhitzung der gedämmten Räume, sowie eine Zerstörung der Wärmedämmung selbst, verhindern.

Die Polymersysteme zeichnen sich durch ihre variable Verarbeitbarkeit, niedrige Schaltzeit, und geringe Kriechneigung aus.

### Beispiele

### Beispiel 1

15 Teile eines molekular einheitlichen Copolymeren aus 93,5 Mol-% Styrol, 6 Mol-% Hydroxyethylmethacrylat und 0,5 Mol-% 4-Acroyloxybutylcarbonatobenzophenon als Fotoinitiator (P1) und 35 Teile Polypropylenoxid (P2) (Mn = 4000) werden in 50 Teilen Toluol bei Raumtemperatur klar gelöst. Die Mischung wird mit einem 200 µm-Rakel auf einen Objektträger gestrichen und das Lösungsmittel verdampft. Der entstandene Polymerfilm wird 30 Minuten lang mit dem UV-Licht (Spektralbereich 290 bis 450 nm) eines UV-Flachbelichters (Bestrahlungsstärke: 30 mW/cm² im UV/A-Bereich) bestrahlt. Danach wird die Polymerschicht aufgeheizt und die Trübungstemperatur gemessen. Sie beträgt 68 °C.

### Beispiel 2 bis 4

Es wird verfahren wie in Beispiel 1, jedoch werden andere Mischungsverhältnisse der Polymeren P1 und P2 verwendet, Tabelle 1.

**Tabelle 1**

| Beispiel | Teile P1 | Teile P2 | Trübungstemperatur [°C] |
|---|---|---|---|
| 2 | 20 | 30 | 80 |
| 3 | 25 | 25 | 100 |
| 4 | 30 | 20 | 130 |

### Beispiel 5

Es wird verfahren wie in Beispiel 1, jedoch werden 20 Teile eines einheitlichen Copolymeren Pla, bestehend aus 95,5 Mol-% Styrol, 4 Mol-% Hydroxyethylmethacrylat und 0,5 Mol-% 4-Acroyloxybutylcarbonatobenzophenon mit 30 Teilen Polypropylenoxid (P2) gemischt. Die Trübungstemperatur dieser Mischung beträgt 40 °C.

### Beispiel 6

Es wird verfahren wie in Beispiel 1, jedoch werden 29 Teile eines einheitlichen Copolymeren Plb, bestehend aus 95 Mol-% Styrol, 4-Mol% Hydroxyethylmethacrylat und 1 Mol-% 4-Acroyloxybutylcarbonatobenzophenon, mit 21 Teilen Polypropylenoxid (P2) gemischt. Die Trübungstemperatur beträgt 41 °C. Die Polymerschicht wurde 150 Minuten lang bei 120 °C gelagert. Nach dem schnellen Abkühlen auf Raumtemperatur ist sie nach acht Minuten wieder transparent geworden.

## Patentansprüche

1. Verfahren zur Herstellung von vernetzten, wasser- und lösemittelfreien Polymersystemen mit reversibel temperaturabhängiger Strahlungstransmission, **dadurch gekennzeichnet, daß** die Polymersysteme strahlungsinduziert vernetzt werden.

2. Verfahren gemäß Anspruch 1, **dadurch gekennzeichnet, daß** es sich um eine Mischung mindestens zweier Polymerer handelt.

3. Verfahren gemäß Anspruch 1 oder 2, **dadurch gekennzeichnet, daß** die Polymersysteme Photoinitiatoren enthalten.

4. Verfahren gemäß einem der Ansprüche 2 bis 3, **dadurch gekennzeichnet, daß** die Glasübergangstemperatur von mindestens einem Polymeren der Mischung unterhalb der Trübungsstemperatur der Polymermischung liegt.

5. Verfahren gemäß einem der Ansprüche 2 bis 4, **dadurch gekennzeichnet, daß** zwei Polymere in der Mischung eine Differenz der Brechungsindizes im Bereich von 0,01 bis 1 aufweisen.

6. Verfahren gemäß einem der Ansprüche 1 bis 5, **dadurch gekennzeichnet, daß** die Wellenlänge der zur Vernetzung verwendeten Strahlung im Bereich von 100 bis 2000 nm liegt, oder die Energie der Elektronenstrahlung 100 bis 500 keV beträgt.

7. Verfahren gemäß Anspruch 1, **dadurch gekennzeichnet, daß** man die Polymerisate in die für die jeweilige Anwendung erforderliche Form bringt und dann bestrahlt.

## Claims

1. A process for the preparation of crosslinked, water- and solvent-free polymer systems having reversibly temperature-dependent radiation transmission, which comprises subjecting the polymer systems to radiation-induced crosslinking.

2. A process as claimed in claim 1, which relates to a mixture of at least two polymers.

3. A process as claimed in claim 1 or 2, wherein the polymer systems comprise photoinitiators.

4. A process as claimed in either of claims 2 and 3, wherein the glass transition temperature of at least one polymer in the mixture is below the cloud point of the polymer mixture.

5. A process as claimed in any one of claims 2 to 4, wherein two polymers in the mixture have a difference in refractive indices in the range from 0.01 to 1.

6. A process as claimed in any one of claims 1 to 5, wherein the wavelength of the radiation used for the crosslinking is in the range from 100 to 2000 nm, or the energy of the electron radiation is from 100 to 500 keV.

7. A process as claimed in claim 1, wherein the polymers are brought into the form necessary for the respective application and are then irradiated.

## Revendications

1. Procédé de préparation de systèmes polymères réticulés, exempts d'eau et de solvant et présentant une transmission de rayonnement qui est fonction inverse de la température, **caractérisé en ce que** les systèmes polymères sont réticulés d'une façon induite par le rayonnement.

2. Procédé suivant la revendication 1, **caractérisé en ce qu'**il s'agit d'un mélange d'au moins deux polymères.

3. Procédé suivant l'une des revendications 1 et 2, **caractérisé en ce que** les systèmes polymères contiennent des photo-initiateurs.

4. Procédé suivant l'une des revendications 2 et 3, **caractérisé en ce que** la température de transition vitreuse d'au moins un polymère du mélange se situe en dessous de la température de trouble du mélange polymère.

5. Procédé suivant l'une des revendications 2 à 4, **caractérisé en ce que** deux polymères du mélange présentent une différence d'indice de réfraction de l'ordre de 0,01 à 1.

6. Procédé suivant l'une des revendications 1 à 5, **caractérisé en ce que** la longueur d'onde du rayonnement utilisé pour la réticulation est de l'ordre de 100 à 2000 nm, ou **en ce que** l'énergie du rayonnement d'électrons est de 100 à 500 keV.

7. Procédé suivant la revendication 1, **caractérisé en ce qu'**on amène les polymères sous la forme requise pour l'application respective et **en ce qu'**ensuite on les irradie.
